# EUROPÄISCHE PATENTSCHRIFT

(11) **EP 0 686 986 B1**
(45) Veröffentlichungstag und Bekanntmachung des Hinweises auf die Patenterteilung: **01.08.2001**
(21) Anmeldenummer: 95108631.3
(22) Anmeldetag: 06.06.1995
(51) Int. Cl.: H01H 1/00, H01H 19/06, H01H 19/08

(54) **Drehschalter**
Rotary switch
Commutateur rotatif

(30) Priorität: 06.06.1994 DE 4419794
(43) Veröffentlichungstag der Anmeldung: 13.12.1995
(73) Patentinhaber: EATON CONTROLS GmbH & Co. KG, 55445 Langenlonsheim (DE)
(72) Erfinder: Dilly, Günter, D-55424 Münster-Sarmsheim (DE); Rudolph, Gerd, D-55459 Aspisheim (DE); Mahr, Herrmann, D-55425 Waldalgesheim (DE)
(74) Vertreter: Becker, Bernd, Dipl.-Ing.

(56) Entgegenhaltungen:
- EP-A- 0 358 504
- EP-A- 0 614 205
- DE-A- 2 014 496
- DE-A- 2 310 716
- DE-A- 2 411 914
- DE-B- 1 039 120
- FR-A- 2 283 028

## Beschreibung

Die Erfindung bezieht sich auf einen Drehschalter, insbesondere Getriebeschalter, mit einem Anschlußkontakte tragenden Gehäuse, in dem in zwei parallelen Ebenen konzentrisch zueinander verlaufende Festkontakte und eine die Festkontakte elektrisch verbindenden Kontaktbrücke vorgesehen sind.

Ein derartiger Schalter ist aus der DE-OS 24 11 914 bekannt. Bei diesem Drehschalter ist als Gehäuseunterteil ein Sockel ausgebildet, der einen Ringfortsatz trägt. Dem Sockel gegenüberliegend ist ein gleichgroßer Deckel angeordnet, der ebenfalls einen Ringfortsatz trägt. In die Ringfortsätze von Sockel und Deckel ist ein Ring mit entsprechenden Ringnuten eingesetzt. Deckel und Sockel sind fest miteinander verbunden, und der Ring ist zwischen den beiden drehbar gelagert. Die Abdichtung zum Schalterinneren erfolgt über die in den Ringnuten eingesetzten Ringfortsätze. Die Abdichtelemente sind somit am äußersten Gehäuseumfang angeordnet, was zur Folge hat, daß ein großer abzudichtender Bereich vorliegt. Ringfortsatz und Ringnut müssen in einer kleinen Paßtoleranz zueinader hergestellt werden. Bei Temperaturänderungen kann es hierbei leicht zu Verzug und zum Verklemmen des Ringes zwischen Deckel und Sockel kommen. In der Ringnut muß der Ringfortsatz beweglich gelagert sein. Hierdruch muß immer ein, wenn auch geringes, Spiel zwischen den Paßelementen vorhanden sein. Über dieses Paßspiel kriecht Feuchtigkeit in das Schalterinnere, was zur Korossion und Fehlschaltungen führt. Die als walzenförmige Kontaktstücke ausgebildeten Kontaktbrücken sind im Ring federbelastet axial ausgerichtet und gleiten auf bogenförmigen Rändern von hohen sektor- oder segmentartig geformten Stanzplättchen. Die Stanzplättchen sind als Einzelstücke hergestellt, eingelegt und befestigt. Die Befestigung und der elektrische Anschluß erfolgt über mit Schlauchgewinden versehenen Metallbolzen, wobei jeder Metallbolzen mit einer Kabelanschlußöse versehen ist, an die eine elektrische Leitung anschließbar ist. Der Innenaufbau des Sockels ist an die Stanzplättchen angeglichen. Demnach ist eine Änderung des Schaltbildes ohne aufwendige Änderung des Sockels nicht möglich. Dadie Kontaktbrücke auf den bogenförmigen Rändern der Stanzplättchen liegt, ist sie in einem Bereich angeordnet, der in der Nähe der eindringenden Feuchtigkeit ist, was zu einer erhöhten Funktionsanfälligkeit führt. Jedes einzelne Stanzplättchen muß für sich befestigt werden, um zum einen den elektrischen Anschluß zu gewährleisten und zum anderen den Festsitz des Stanzplättchens zu erhalten. Der dadurch notwendige Platzbedarf verhindert ein Erweitern um weitere notwendige Strompfade. In zwei Radialebenen sind die Stanzblättchen zueinander angeordnet. Die Kontaktierung erfolgt nur über die bogenförmigen Ränder, wodurch der Raum zwischen den Radialebenen ungenutzt bleibt.

Ferner geht aus der DE-AS 10 39 120 ein elektrisches Schaltgerät hervor, das einen ähnlichen geometrischen Aufbau mit zwei als Scheiben ausgebildeten, durch eine Hohlnut verbundenen Gehäuseteilen und einem dazwischen gelagerten Ring besitzt. In einer Ausdrehung im Ring sind die Scheiben eingesetzt, und durch das dabei vorhandene Labyrinth soll das Eindringen von Staub verhindert werden. Am Boden einer Scheibe ist ein Widerstand befestigt, an dem je nach Stellung der Scheibe ein entsprechender Wert durchgeschaltet wird. Die Anschlußstifte werden achsparallel aus der Scheibe herausgeführt, müssen als gesondertes Teil hergestellt werden und benötigen neben der Verbindungsarbeit auch einen erhöhten Platzbedarf. Bei zu starkem Befestigungsdruck auf die Hohlniet werden die Scheiben leicht verformt, was zu einer überhöhten Undichtigkeit im Bereich der Ausdrehung führt, wodurch auch das saubere Gleiten der Teile aufeinander gestört wird. Dies kann sogar zu einer Festklemmung des Ringes auf den durch die Kraft verwölbten Kanten führen.

Der Erfindung liegt die Aufgabe zugrunde, einen Drehschalter der eingangs genannten Art zu schaffen, der einen kompakten, dichten Aufbau besitzt, veränderbaren Schaltpfaden und Schaltwerten leicht anpaßbar ist und eine Vielzahl von Strompfaden bei einer geringen Anzahl von Einzelteilen zuläßt.

Diese Aufgabe wird erfindungsgemäß dadurch gelöst, daß in jeder Ebene die Festkontakte aus mindestens einem Stanzgitter bestehen, die pro Ebene in einem Abstandsstege und Paßelemente aufweisenden Kontaktträger eingespritzt sind, und die Kontaktträger zu einem Kontaktmodul zusammengesetzt sind, wobei im durch die Abstandsstege der Kontaktträger gebildeten Kontaktraum auf der freiliegenden, dem Kontaktraum zugewandten Kontaktfläche der Stanzgitter mindestens eine in einem im Gehäuse konzentrisch schwenkbar gelagerten Schaltglied federbelastet gehalterte Kontaktbrücke gleitet.

Durch diese Maßnahmen muß pro Ebene nur ein Teil eingesetzt werden, und durch die am Kontaktträger befindlichen Abstandsstege liegt stets die korrekte Höhe des Kontaktraumes vor, indem für die am Schaltglied gehalterte Kontaktbrücke stets die gleichen Kontaktverhältnisse bestehen. Die Anwendung eines Stanzgitters ermöglicht eine große Anzahl von Schaltpfaden. Durch den Austausch nur eines Kontaktträgers des Kontaktmoduls ist ein neues Schaltbild erhältlich.

Nach einer vorteilhaften Ausgestaltung der Erfindung besitzt das aus den Kontaktträgern zusammengesetzte Kontaktmodul einen kreissegmentförmigen Umriß mit einem davon abgehenden, die Anschlußkontakte tragenden Fortsatz, und die Abstandsstege sind auf der äußeren Kreissegmentbahn sowie der seitlichen Segmentbegrenzung und im Bereich des Fortsatzes angeordnet, wobei die Paßelemente an den Abstandsstegen angeformt sind. Die sich daraus ergebenden Vorteile sind zum einen, daß nur ein dem Schwenkbereich des Schaltgliedes angepaßter Bereich vorhanden sein muß, und zum anderen, daß der am Kreissegment vorhandene Fortsatz sogleich die Anschlußkontakte einstückig mit dem Stanzgitter darlegt. Weiterhin ist der Kontaktraum abgeschirmt, wobei die Abschirmung durch die Abstandsstege stattfindet, und in die Abstandsstege die Paßelemente integriert sind, wodurch keine höhere Bauhöhe erforderlich ist.

Entsprechend der Stellung des Drehschalters soll ein vorbestimmter Widerstandswert im Strompfad eingebunden sein, wobei die Höhe des Kontaktmodules nicht vergrößert werden soll. Zweckmäßigerweise ist dazu im Kontaktmodul eine Kammer eingelassen, in die ein Widerstandsnetzwerk eingelegt und mit Schweißkontakten des Stanzgitters elektrisch verbunden ist. Weiterhin ist bevorzugt vorgesehen, daß die Bodenfläche der Kammer im Kontaktmodul eine schiefe Ebene bildet, auf der das Widerstandsnetzwerk in die Kammer hineingleitet, und an der Bodenfläche stehen Anschläge vor, die das Widerstandsnetzwerk derart fixieren, daß die Kontaktbeine über den Schweißkontakten des Stanzgitters zu liegen kommen. Das Widerstandsnetzwerk wird nur lose in die Kammer hineingelegt und rutscht auf der schiefen Ebene bis zu den Anschlägen. In dieser Lage befinden sich die Kontaktbeine des Widerstandsnetzwerkes über den Schweißkontakten des Stanzgitters, wodurch eine zusätzliche Fixierung und Halterung für das Schweißen nicht mehr erforderlich ist.

Nach einer vorteilhaften Weiterbildung der Erfindung trägt das im Kontaktmodul schwenkbewegliche Schaltglied zu jeder Kontaktfläche eines Kontaktträgers hin mindestens eine federbelastete Kontaktbrücke. Somit können sowohl Strompfade auf dem dem Gehäuseunterteil gegenüberliegenden Kontaktträger als auch auf dem dem Deckel gegenüberliegenden Kontaktträger gleichzeitig geschlossen werden. Auch eine Durchkontaktierung von einem Kontaktträger zu dem gegenüberliegenden ist durch entsprechend ausgebildete, im Schaltglied gehalterte Kontaktbrücken möglich.

Um ein einfaches und schnelles Montieren sowohl der Einzelteile in das Schaltglied als auch des Schaltgliedes selbst in das Kontaktmodul zu erreichen, ist zweckmäßigerweise die Kontaktbrücke U-förmig ausgebildet, und in mindestens einen Schenkel der Kontaktbrücke ist ein Rastloch eingestanzt, in das nach dem Einsetzen der Kontaktbrücke im Schaltglied eine am Schaltglied angeformte Raste eingreift, die die Kontaktbrücke unverlierbar federbelastet haltert.

Nach einer vorteilhaften Ausführungsform besteht das Schaltglied und das das Kontaktmodul aufnehmende Gehäuse aus einem in einer Ausformung das Kontaktmodul aufnehmenden Gehäuseunterteil das Befestigungslöcher und einen Steckerkragen aufweist, und einem das Gehäuseunterteil schließenden, einen Justageschlitz tragenden Deckel, wobei das Gehäuseunterteil und der Deckel je eine koaxiale Bohrung aufweisen, in denen eine Mitnahmemittel aufweisende Nabe des Schaltgliedes schwenkbar gelagert eingesetzt ist. Hierdurch liegt jede Öffnung im Drehschalter in nur einer Ebene vor, was das sichere Abdichten des Drehschalters erleichtert. Über die koaxial vorliegende Bohrung im Gehäuseunterteil und im Deckel ist sowohl die Lagerung der Nabe des Schaltgliedes als auch die Ausrichtung des Deckels sichergestellt. Um zusätzliche Abdichtprobleme zu vermeiden, weist bevorzugt der am Gehäuseunterteil angeformte, die Anschlußkontakte aufnehmende Steckerkragen einen umlaufenden geschlossenen Rand, eine Durchtrittsöffnung zur Ausformung und eine Einstecköffnung für einen Anschlußstecker auf.

Eine höhenmäßige Ausrichtung des Kontaktmodules sowie ein das Klappern vermeidendes Fixieren des oberen Kontaktträgers, wobei auch das Kontaktmodul stets auf seinen Stanzstegen zusammengepreßt wird und gleichzeitig die symmetrische Ausrichtung der Anschlußstecker im Steckerkragen erfolgt, wird nach einer Weiterbildung der Erfindung dadurch erreicht, daß am Boden der Ausformung im Gehäuseunterteil Ausrichtrippen, auf denen das Kontaktmodul zur Anlage kommt, sowie Führungszapfen, die in entsprechende Führungslöcher im Kontaktmodul eingreifen, vorgesehen sind, wobei am Deckel der Ausformung gegenüber in Richtung des Kontaktmodules Fixierrippen vorhanden sind. Über die Führungszapfen im Gehäuseunterteil erfolgt die lagemäßige Fixierung des Kontaktmodules in Richtung des Steckerkragens. Ein Führungszapfen wirkt mit einer paßgenauen Führungsbohrung zusammen, und der andere Führungszapfen ist zum Toleranzausgleich in ein Langloch eingesetzt.

Um das Eindringen von Fremdkörpern sowie von Feuchtigkeit in das Schalterinnere zu verhindern, weisen Zweckmäßigerweise das Gehäuseunterteil und der Deckel aufeinander abgestimmte, umlaufende Dichtprofile auf, wobei in einer Aufnahmenut im Gehäuseunterteil ein Metallring eingelegt ist, Gehäuseunterteil und Deckel induktionsverschweißt sind, in den die Anschlußkontakte aufweisenden Steckerkragen ist ein die Anschlußkontakte und den Innenbereich des Steckerkragens dichtend umschließender, mit einem Preßkranz gehaltener Dichteinsatz eingesetzt, und in je einen umlaufenden, der Nabe des Schaltgliedes zugeordneten Sitz ist ein die Bohrung im Gehäuseunterteil und die Bohrung im Deckel abdichtender Dichtring eingeschoben. Somit sind alle abzudichtenden Stellen mit je einem separaten Bauelement hermetisch abgedichtet. Eine gegenseitige Beeinflussung der Dichtelemente ist dadurch ausgeschlossen. Der Preßsitz im Steckerkragen fixiert außerdem noch die Anschlußkontakte. Der Metallring in der Aufnahmenut im Gehäuseunterteil unterstützt die Induktionsverschweißung, und die Dichtringe sorgen an der Nabe für eine gute Abdichtung, wobei das Schaltglied gleichzeitig noch leicht drehbar ist.

Zur Anpassung an platzmäßige Gegebenheiten besitzt bevorzugt eine Anschraubplatte des Gehäuseunterteiles, welche eine die Nabe des Schaltgliedes aufnehmende Bohrung aufweist eine parallele Ausrichtung zum Boden der Ausformung und das Schaltglied weist zwischen der Nabe und dem die Kontaktbrücken haltenden Bereich einen Z-Sprung auf.

Weiterhin ist bevorzugt vorgesehen, daß die umlaufenden Dichtprofile zwischen Gehäuseunterteil und Deckel in einer Ebene liegen. Dadurch wird das Induktionsverschweißen von Gehäuseunterteil und Deckel erleichtert. Ferner ist die Herstellung des Metallringes als ebenes Teil wesentlich einfacher.

Um zu gewährleisten, daß im Schalterinnern stets der gleiche Druck wie auf der Außenseite des Drehschalters vorliegt, ist nach einer vorteilhaften Ausgestaltung in der Ebene zwischen dem Gehäuseunterteil und dem Deckel ein luftdurchlässiger Propfen vorgesehen. Dieser, dem Druckausgleich dienende Propfen ist luftdurchgängig in beide Richtungen, jedoch undurchlässig für feste und/oder flüssige Stoffe. Bevorzugt weist das Gehäuseunterteil im Bereich des Dichtprofiles zum Schalterinnern hin einen Entlüftungsschlitz sowie zwischen der Außenseite des Drehschalters und dem Propfen eine Entlüftungsbohrung auf, und am Deckel ist ein den Preßsitz des Propfens bewirkender Turm mit einer Belüftungsnut vorhanden. Zweckmäßigerweise besteht der Propfen aus einem Sintermaterial. Hierdurch läßt sich der Propfen leicht elastisch verformen, wodurch eine dichte Einspannung zwischen dem Gehäuseunterteil und dem Deckel erfolgt.

Zur Erreichung eines leichten Befestigens des Drehschalters ist bevorzugt an der Anschraubplatte des Gehäuseunterteiles eine das justierte Anschrauben erleichternde Kehle angeformt.

Der der Erfindung zugrundeliegende Gedanke wird in der nachfolgenden Beschreibung anhand eines Ausführungsbeispieles, das in der Zeichnung dargestellt ist, näher erläutert. Es zeigt:

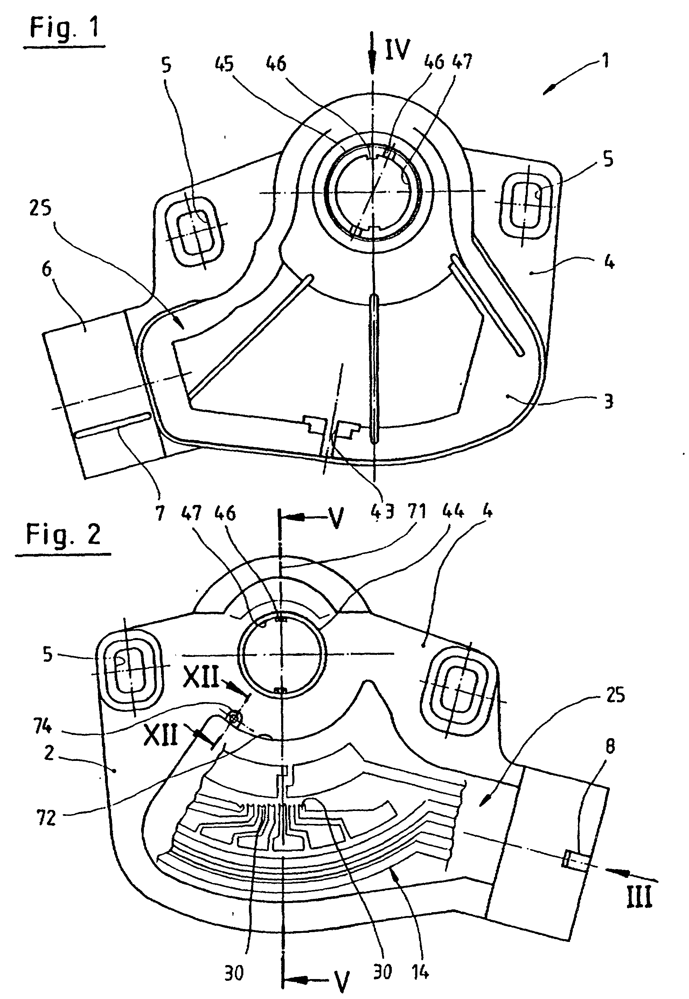

- Fig. 1: eine Ansicht auf einen Drehschalter gemäß der Erfindung,
- Fig. 2: die Rückansicht auf den Drehschalter gemäß Fig. 1 mit einem Schnittausbruch zur Darstellung des Stanzgitters,

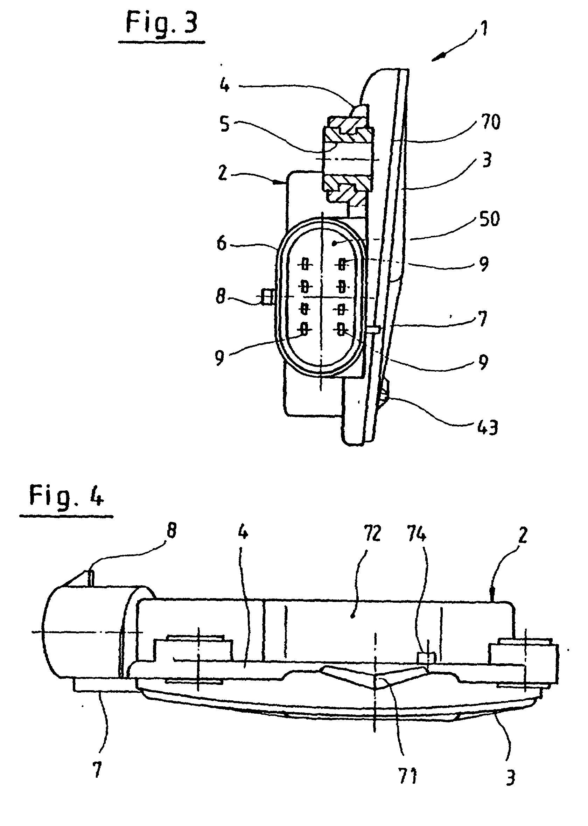

- Fig. 3: eine Ansicht in Richtung des Pfeiles III gemäß Fig. 2,
- Fig. 4: eine Ansicht in Richtung des Pfeieles IV gemäß Fig. 1,

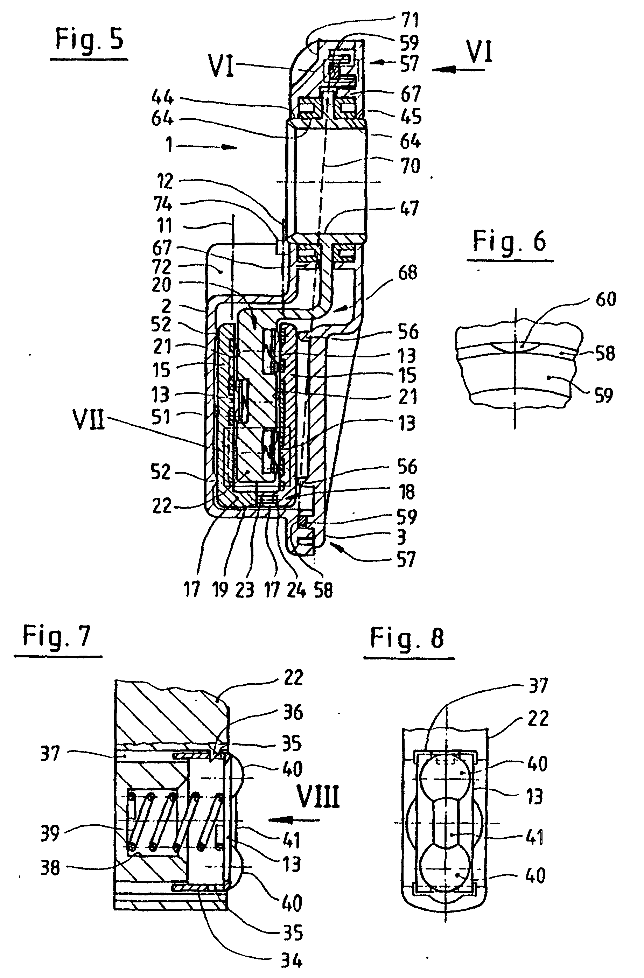

- Fig. 5: einen Schnitt durch den Drehschalter gemäß Fig. 2 entlang der Linie V-V,
- Fig. 6: eine vergrößerte Darstellung der Einzelheit VI in Blickrichtung des Pfeiles VI gemäß Fig. 5,
- Fig. 7: eine vergrößerte Darstellung der Einzelheit der Darstellung VII gemäß Fig. 5,
- Fig. 8: eine Ansicht auf Fig. 7 gemäß Pfeil VIII,

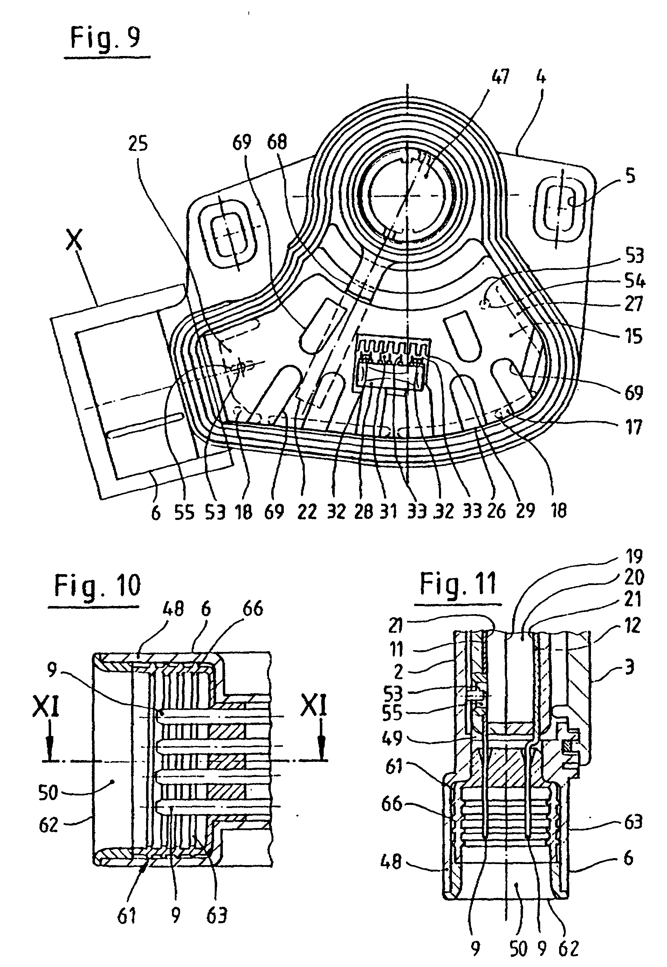

- Fig. 9: eine Ansicht auf den Drehschalter gemäß Fig. 1, jedoch ohne Deckel,
- Fig. 10: eine vergrößerte Darstellung der Einzelheit X gemäß Fig. 9,
- Fig. 11: einen Schnitt durch die Fig. 10 gemäß der Linie XI-XI, und

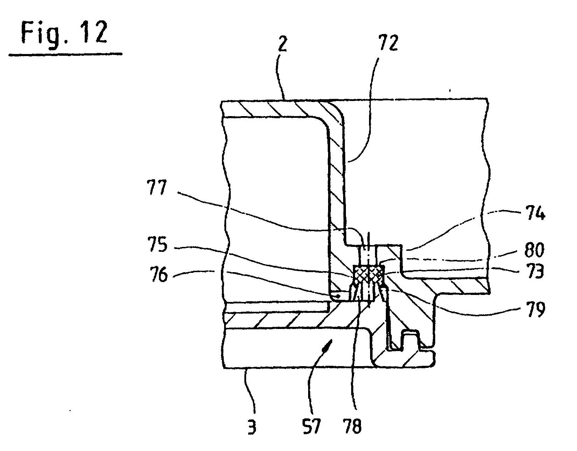

- Fig. 12: eine vergrößerte Darstellung des Schnittes gemäß der Linie XII-XII nach Fig. 2.

Das Gehäuse 1 des Drehschalters besteht im wesentlichen aus dem Gehäuseunterteil 2 und dem Deckel 3. Am Gehäuseunterteil 2 befindet sich die Anschraubplatte 4 mit im wesentlichen rechteckigen Schraublöchern 5. Einstückig ist am Gehäuseunterteil auch der Steckerkragen 6 angeformt, der eine Führungsrippe 7 und eine Rastnase 8 zum unverwechselbaren und sicheren Befestigen eines nicht dargestellten Anschlußsteckers aufweist. Im Steckerkragen 6 stehen vor außerer Berührung geschützt, die Anschlußkontakte 9 in einem festgelegten Rastermaß vor. Im Gehäuse 1 sind in zwei parallelen Ebenen 11, 12 Festkontakte 10 vorhanden, die von Kontaktbrücken 13 elektrisch miteinander verbunden werden. Die Festkontakte 10 bestehen in jeder Ebene 11, 12 aus mindestens einem Stanzgitter 14. Die Stanzgitter 14 sind pro Ebene 11, 12 in einen Kontaktträger 15 eingespritzt. Die Kontaktträger 15 sind zu einem Kontaktmodul 16 zusammengesetzt. Dazu weisen die Kontaktträger 15 Abstandsstege 17 und Paßelemente 18 auf. Mit den Stirnflächen 19 der Abstandsstege 17 kommen die Kontaktträger 15 aufeinander zur Anlage und bilden dabei zwischen sich den Kontaktraum 20. Die Paßelemente 18 an den Abstandsstegen 17 bestehen aus einem Paßstift 23 und einer Paßbohrung 24. Die Kontaktfläche 21 der Stanzgitter 14 liegt im Innern des Kontaktraumes 20 des Kontaktmoduls 16 frei. Im Kontaktraum 20 ist das Schaltglied 22, welches die Kontaktbrücken 13 trägt frei schwenkbar. Im Gehäuse 1 ist das Schaltglied 22 konzentrisch zum Stanzgitter 14 schwenkbar gelagert. In dem vom Schaltglied 22 überstrichenen Bereich der Kontaktträger 15 besitzt das Kontaktmodul 16 einen kreissegmentförmigen Umriß. Abgehend davon besitzt das Kontaktmodul 16, das aus den Kontaktträgern 15 zusammengesetzt ist, einen Fortsatz 25, der die Anschlußkontakte 9 trägt. Die Abstandsstege 17 sind auf der äußeren Kreissegmentbahn 26, auf der seitlichen Segmentbegrenzung 27 und im Bereich des Fortsatzes 25 angeordnet. Zwei Paßelemente 18 sind an den Abstandsstegen 17 angeformt.

Ein Kontaktträger 15 des Kontaktmoduls 16 trägt ein Widerstandsnetzwerk 28. Dazu ist in die der Kontaktfläche 21 abgewandten Seite des Kontaktträgers 15 eine Kammer 29 eingelassen. Die Kammer 29 ist so tief ausgeformt, daß als Schweißkontakte 30 ausgebildete Teile des Stanzgitters 14 freiliegen, an die das Widerstandsnetzwerk 28 angeschweißt ist. Im Kontaktmodul 16 bildet die Bodenfläche 31 der Kammer 29 eine schiefe Ebene, und Anschläge 32 stehen von der Bodenfläche 31 ab. Beim Einlegen des Widerstandsnetzwerkes 28 in die Kammer 29 gleitet dieses auf der schiefen Ebene in die Kammer bis zu den Anschlägen 32. Die Anschläge 32 sind so ausgelegt, daß die Kontaktbeine 33 des Widerstandsnetzwerkes 28 über den Schweißkontakten 30 des Stanzgitters 14 zu liegen kommen, wodurch ein weiteres Fixieren zum Durchführen des Schweißvorganges nicht mehr erforderlich ist. Im Kontaktraum 20 des Kontaktmoduls 16 wird das schwenkbewegliche Schaltglied 22 bewegt. Das Stanzgitter 14 stellt die Kontaktfläche 21 eines jeden Kontaktträgers 19 dar. Auf der dem Deckel 3 zugewandten Seite des Schaltgliedes 22 trägt dieses drei federbelastete Kontaktbrücken 13. Auf der dem Gehäuseunterteil 2 zugewandten Seite trägt das Schaltglied 22 eine federbelastete Kontaktbrücke 13. Das Schaltglied 22 weist Ausnehmungen 37 auf, in die die U-förmig ausgebildete Kontaktbrücke 13 eingesetzt ist. Mittig zur Kontaktbrücke 13 befindet sich im Schaltglied 22 eine Sackbohrung 38, in der sich die Druckfeder 39 abstützt und die Kontaktbrücke 13 in Richtung der Kontaktfläche 21 drückt. In den Schenkeln 34 der Kontaktbrücke 13 ist ein Rastloch 35 eingestanzt. Nach dem Einsetzen der Kontaktbrücke 13 in die Ausnehmungen 37 im Schaltglied 22 greift eine am Schaltglied 22 angeformte Raste 36 in das Rastloch 35 ein und haltert die federbelastete Kontaktbrücke 13 unverlierbar. Die Kontaktbrücke 13 besitzt zwei Kontaktkalotten 40, mit denen sie auf der Kontaktfläche 21 des Kontaktträgers 15 gleitet. Zur Versteifung der Kontaktbrücke 13 befindet sich eine Ausprägung 41 zwischen den Kontaktkalotten 40. Im Gehäuseunterteil 2, das in seiner Anschraubplatte 4 die Befestigungslöcher 5 aufweist, ist eine Ausformung 42 eingelassen, in die das das Schaltglied 22 in sich aufnehmende Kontaktmodul 16 eingesetzt ist. Einstückig ist auch der Steckerkragen 6 am Gehäuseunterteil 2 angeformt. Der einen Justageschlitz 43 tragende Deckel 3 schließt das Gehäuseunterteil 2. Das Gehäuseunterteil 2 und der Deckel 3 weisen je eine koaxiale Bohrung 44, 45 auf. In die koaxiale Bohrung 44, 45 wird die Nabe 47 des Schaltgliedes 22 schwenkbar gelagert eingesetzt. Die Nabe 47 des Schaltgliedes 22 besitzt in ihrem Inneren Mitnahmemittel 46 mit denen das Schaltglied 22 in die entsprechenden Drehpositionen eingestellt wird.

Der die Anschlußkontakte 9 aufnehmende Steckerkragen 6 ist mit einem umlaufenden, geschlossenen Rand 48, einer Durchtrittsöffnung 49 zur Ausformung 42 des Gehäuseunterteiles 2 und einer Einstecköffnung 50 für einen nicht dargestellten Anschlußstecker versehen.

Ausrichtrippen 52 sind am Boden 51 der Ausformung 42 des Gehäuseunterteiles 2 vorhanden. Auf diesen Ausrichtrippen 52 kommt das Kontaktmodul 16 zur Anlage. Vom Boden 51 abstehende Führungszapfen 53 greifen in entsprechende Führungslöcher 54, 55 im Kontaktmodul 16 ein. Das Führungsloch 55 ist als Langloch ausgelegt, um einen Toleranzausgleich mit dem Kontaktmodul 16 zu erhalten.

Auf der Innenseite des Deckels 3 sind der Ausformung 42 gegenüber in Richtung des Kontaktmoduls 16 Fixierrippen 56 angebracht. Bei geschlossenem Deckel 3 drücken die Fixierrippen 56 das Kontaktmodul 16 gegen die Ausrichtrippen 52 und klemmen dabei das Kontaktmodul 16 fest. Damit ist eine axiale Festlegung erfolgt. Über die Führungszapfen 53 in Verbindung mit den Führungslöchern 54 und 55 erfolgt die Festlegung senkrecht dazu.

Das Gehäuseunterteil 2 und der Deckel 3 weisen aufeinander abgestimmte und ineinandergreifende Dichtprofile 57 auf. In eine Aufnahmenut 58 im Gehäuseunterteil 2 ist ein Metallring 59 eingelegt. Der Metallring 59 besitzt einen rechteckigen Querschnitt und ist der umlaufenden Form des Deckels 3 bzw. des Gehäuseunterteils 2 angepaßt. In der Aufnahmenut 58 sind den Metallring 59 fixierende Ausgleichsnoppen 60 angespritzt. Der Metallring 59 ist somit nach dem Einlegen in die Aufnahmenut 58 spielfrei. Nach dem Einsetzen des bestückten Kontaktmoduls 16 in die Ausformung 42 im Gehäuseunterteil 2 wird das Gehäuseunterteil 2 mit dem Deckel 3 induktionsverschweißt. Durch die Induktionsverschweißung ist eine feuchtigkeits- und staubdichte Verbindung des Gehäuses 1 hergestellt.

In den Steckerkragen 6 des Gehäuseunterteils 2 ist ein die Anschlußkontakte 9 dichtend umgreifender Dichteinsatz 63 in den Innenbereich 61 des Steckerkragens 6 eingesetzt. Mit einem durch Preßsitz gehaltenen Preßkranz 62 wird der Dichteinsatz 63 fest in den Innenbereich 61 gedrückt, wodurch durch die Dichtlippen 66 am umlaufenden Rand 48 eine Abdichtung erfolgt. Das Eindrücken des Dichteinsatzes 63 verstärkt die schon dichtende Umgreifung der Anschlußkontakte 9. Beidseitig der Nabe 47 des Schaltgliedes 22 ist ein Sitz 64 für einen Dichtring 65 vorhanden. Jedem Sitz 64 ist ein umlaufender Ring 67 am Gehäuseunterteil 2 und am Deckel 3 zugeordnet. Beim Zusammenfügen von Gehäuseunterteil 2 und Deckel 3 mit zwischenliegender Nabe 47 des Schaltgliedes 2 stützt sich der Dichtring 65 auf dem Sitz 64 und den umlaufenden Ring 67 dichtend ab. Der Bereich der Anschraubplatte 4, in dem die Bohrung 44 des Gehäuseunterteils 2 für die Aufnahme der Nabe 47 des Schaltgliedes 12 eingelassen ist, besitzt eine parallele Ausrichtung zum Boden 51 der Ausformung 42. Durch einen Z-Sprung 68 zwischen der Nabe 47 und dem die Kontaktbrücken 13 haltenden Bereich des Schaltgliedes 22 wird der parallele Versatz zwischen den koaxialen Bohrungen 44, 45 sowie dem in der Ausformung 42 eingesetzten Kontaktmodul 16 überbrückt. In den Kontaktträger 15 des Kontaktmoduls 16 sind auf der den Kontaktflächen 21 gegenüberliegenden Seiten Nuten 69 zur Materialersparnis und zum verzugarmen Festigen der Stanzgitter 14 beim Spritzvorgang eingelassen.

Die Trennaht zwischen Gehäuseunterteil 2 und Deckel 3 ist so ausgeführt, daß die umlaufenden Dichtprofile 57 in einer Ebene 70 liegen.

Im Eckbereich zwischen der Anschraubplatte 4 und der das Kontaktmodul 16 einschließenden Wandung 72 ist zwischen dem Gehäuseunterteil 2 und dem Deckel 3 ein luftdurchlässiger Propfen 73 eingespannt. Dieser Propfen 73 befindet sich in der Ebene 70 der umlaufenden Dichtprofile 57. Damit der Propfen ausreichend dick ausgestaltet werden kann, ist am Gehäuseunterteil 2 ein Ansatz 74 angespritzt, der in einem Sitz 75 den Propfen 73 aufnimmt. Von der Schulter 80 des Sitzes 75 führt eine Entlüftungsbohrung 77 zum Schalteräußeren. Im Dichtungsprofil 57 ist weiterhin ein Entlüftungsschlitz 76 eingelassen, über den das Druckniveau des Schalterinneren auf der Innenseite des Propfens 73 vorliegt. Der Deckel 3 trägt einen Turm 79, der den Propfen 73 gegen den Sitz 75 preßt. Eine Belüftungsnut 78 ist im Turm 79 vorhanden, um eine möglichst große freie Oberfläche für den Druckausgleich zur Verfügung zu stellen. Der Propfen 73 besteht aus einem Sintermaterial, welches luft- bzw. gasdurchlässig und soweit elastisch ist, um eine spielfreie, dichte Verpressung zu erhalten.

Im Gehäuseunterteil 2 ist eine der Anschraubplatte 4 zugeordnete stumpfwinklige Kehle 71 eingeformt. Mit Hilfe dieser Kehle 71 wird das Gehäuse 1 des Drehschalters beim Anschrauben selbsttätig justiert.

## Patentansprüche

1. Drehschalter, insbesondere Getriebeschalter, mit einem Anschlußkontakte (9) tragenden Gehäuse (1), in dem in zwei parallelen Ebenen (11, 12) konzentrisch zueinander verlaufende Festkontakte (10) und eine die Festkontakte (10) elektrisch verbinden Kontaktbrücke (13) vorgesehen sind, dadurch gekennzeichnet, daß in jeder Ebene (11, 12) die Festkontakte (10) aus mindestens einem Stanzgitter (14) bestehen, die pro Ebene (11, 12) in einem Abstandsstege (17) und Paßelemente (18) aufweisenden Kontaktträger (15) eingespritzt sind und die Kontaktträger (15) zu einem Kontaktmodul (16) zusammengesetzt sind, wobei im durch die Abstandsstege (17) der Kontaktträger (15) gebildeten Kontaktraum (20) auf der freiliegenden, dem Kontaktraum (20) zugewandten Kontaktfläche (21) der Stanzgitter (14) mindestens eine in einem im Gehäuse (1) konzentrisch schwenkbar gelagerten Schaltglied (22) federbelastet gehalterte Kontaktbrücke (13) gleitet.

2. Drehschalter nach Anspruch 1, dadurch gekennzeichnet, daß das aus den Kontaktträgern (15) zusammengesetzte Kontaktmodul (16) einen kreissegmentförmigen Umriß mit einem davor abgehenden, die Anschlußkontakte (9) tragenden Fortsatz (25) besitzt, und die Abstandsstege (17) auf der äußeren Kreissegmentbahn (16) sowie der seitlichen Segmentbegrenzung (27) und im Bereich des Fortsatzes (25) angeordnet sind, wobei die Paßelemente (18) an den Abstandsstegen (17) angeformt sind.

3. Drehschalter nach einem der Ansprüche 1 oder 2, dadurch gekennzeichnet, daß im Kontaktmodul (16) eine Kammer (29) eingelassen ist, in die ein Widerstandsnetzwerk (28) eingelegt und mit Schweißkontakten (30) des Stanzgitters (14) elektrisch verbunden ist.

4. Drehschalter nach Anspruch 3, dadurch gekennzeichnet, daß die Bodenfläche (31) der Kammer (29) im Kontaktmodul (16) eine schiefe Ebene bildet, auf der das Widerstandsnetzwerk (28) in die Kammer (29) hineingleitet, und an der Bodenfläche (31) Anschläge (32) vorstehen, die das Widerstandsnetzwerk (28) derart fixieren, daß die Kontaktbeine (33) über den Schweißkontakten (30) des Stanzgitters (14) zu liegen kommen.

5. Drehschalter nach einem der Ansprüche 1 bis 4, dadurch gekennzeichnet, daß das im Kontaktmodul (16) schwenkbewegliche Schaltglied (22) zu jeder Kontaktfläche (21) eines Kontaktträgers (15) hin mindestens eine federbelastete Kontaktbrücke (13) trägt.

6. Drehschalter nach einem der Ansprüche 1 bis 5, dadurch gekennzeichnet, daß die Kontaktbrücke (13) U-förmig ausgebildet ist, und in mindestens einen Schenkel (34) der Kontaktbrücke (13) ein Rastloch (35) eingestanzt ist, in das nach dem Einsetzen der Kontaktbrücke (13) im Schaltglied (22) eine am Schaltglied (22) angeformte Raste (36) eingreift, die die Kontaktbrücke (13) unverlierbar federbelastet haltert.

7. Drehschalter nach einem der Ansprüche 1 bis 6, dadurch gekennzeichnet, daß das Schaltglied (22) und das das Kontaktmodul (16) aufnehmende Gehäuse (1) aus einem in einer Ausformung (42) das Kontaktmodul (16) aufnehmenden Gehäuseunterteil (2), das Befestigungslöcher (5) und einen Steckerkragen (6) aufweist, und einem das Gehäuseunterteil (2) schließenden, einen Justageschlitz (43) tragenden Deckel (3) besteht, wobei das Gehäuseunterteil (2) und der Deckel (3) je eine koaxiale Bohrung (44, 45) aufweisen, in denen eine Mitnahmemittel (46) aufweisende Nabe (47) des Schaltgliedes (22) schwenkbar gelagert eingesetzt ist.

8. Drehschalter nach einem der Ansprüche 1 bis 7, dadurch gekennzeichnet, daß der am Gehäuseunterteil (2) angeformte die Anschlußkontakte (9) aufnehmende Steckerkragen (6) einen umlaufenden geschlossenen Rand (48), und eine Durchtrittsöffnung (49) zur Ausformung (42) und eine Einstecköffnung (50)für einen Anschlußstecker aufweist.

9. Drehschalter nach einem der Ansprüche 1 bis 8, dadurch gekennzeichnet, daß am Boden (51) der Ausformung (42) im Gehäuseunterteil (2) Ausrichtrippen (52), auf denen das Kontaktmodul (16) zur Anlage kommt, sowie Führungszapfen (53), die in entsprechende Führungslöcher (54, 55) im Kontaktmodul (16) eingreifen, vorgesehen sind, wobei am Deckel (3) der Ausformung (42) gegenüber in Richtung des Kontaktmodules (16) Fixierrippen (56) vorhanden sind.

10. Drehschalter nach einem der Ansprüche 1 bis 9, dadurch gekennzeichnet, daß das Gehäuseunterteil (2) und der Deckel (3) aufeinander abgestimmte, umlaufende Dichtprofile (57) aufweisen, wobei in eine Aufnahmenut (58) im Gehäuseunterteil (2) ein Metallring (59) eingelegt ist, Gehäuseunterteil (2) und Deckel (3) induktionsverschweißt sind, in den die Anschlußkontakte (9) aufweisenden Steckerkragen (6) ein die Anschlußkontakte (9) und den Innenbereich (61) des Steckerkragens (6) dichtend umschließender, mit einem Preßkranz (62) gehaltener Dichteinsatz (63) eingesetzt ist, und in je einen umlaufenden, der Nabe (47) des Schaltgliedes (22) zugeordneten Sitz (64) ein die Bohrung (44) im Gehäuseunterteil (2) und die Bohrung (45) im Deckel (3) abdichtender Dichtring (65) eingeschoben ist.

11. Drehschalter nach einem der Ansprüche 1 bis 10, dadurch gekennzeichnet, daß eine Anschraubplatte (4) des Gehäuseunterteils (2), welche eine die Nabe (47) des Schaltgliedes (22) aufnehmende Bohrung (44) aufweist eine parallele Ausrichtung zum Boden (51) der Ausformung (42) besitzt, und das Schaltglied (22) zwischen der Nabe (47) und dem die Kontaktbrücken (13) halternden Bereich (68) einen Z-Sprung aufweist.

12. Drehschalter nach einem der Ansprüche 1 bis 11, dadurch gekennzeichnet, daß die umlaufenden Dichtprofile (57) zwischen Gehäuseunterteil (2) und Deckel (3) in einer Ebene (70) liegen.

13. Drehschalter nach einem der Ansprüche 1 bis 12, dadurch gekennzeichnet, daß in der Ebene (70) zwischen dem Gehäuseunterteil (2) und dem Deckel (3) ein luftdurchlässiger Pfropfen (73) vorgesehen ist.

14. Drehschalter nach einem der Ansprüche 1 bis 13, dadurch gekennzeichnet, daß das Gehäuseunterteil (2) im Bereich des Dichtprofils (57) zum Schalterinnern hin einen Entlüftungsschlitz (76) sowie zwischen der Außenseite des Drehschalters und dem Pfropfen (73) eine Entlüftungsbohrung (77) aufeist und am Deckel (3) ein den Preßsitz des Pfropfens (73) bewirkender Turm (79) mit einer Belüftungsnut (78) vorhanden ist.

15. Drehschalter nach einem der Ansprüche 1 bis 14, dadurch gekennzeichnet, daß der Pfropfen (73) aus einem Sintermaterial besteht.

16. Drehschalter nach einem der Ansprüche 1 bis 15, dadurch gekennzeichnet, daß an der Anschraubplatte (4) des Gehäuseunterteils (2) eine, das justierende Anschrauben erleichternde Kehle (71) angeformt ist.

## Claims

1. Rotary switch, more especially a transmission switch, having a housing (1), which carries connection contacts (9), and in which housing are provided fixed contacts (10), which extend in two parallel planes (11, 12) concentrically relative to each other, and a contact bridge (13) which electrically connects the fixed contacts (10), characterised in that the fixed contacts (10) in each plane (11, 12) comprise at least one punched lattice (14), which lattices are injected per plane (11, 12) in a contact carrier (15) having spacer webs (17) and adjusting elements (18), and the contact carriers (15) are combined to form a contact module (16), at least one contact bridge (13) sliding in the contact area (20), formed by the spacer webs (17) of the contact carriers (15), on the exposed contact face (21) of the punched lattices (14) facing the contact area (20), said contact bridge being supported in a spring-loaded manner in a switching member (22), which is concentrically pivotably mounted in the housing (1).

2. Rotary switch according to claim 1, characterised in that the contact module (16), which comprises the contact carriers (15), has a circular segmental configuration with an extension (25), which departs therefrom and carries the connection contacts (9), and the spacer webs (17) are disposed on the external circular segmental path (26) as well as on the lateral segmental boundary (27) and in the region of the extension (25), the adjusting members (18) being provided on the spacer webs (17).

3. Rotary switch according to one of claims 1 or 2, characterised in that a chamber (29) is provided in the contact module (16), and a resistor network (28) is inserted into said chamber and is electrically connected to welding contacts (30) of the punched lattice (14).

4. Rotary switch according to claim 3, characterised in that the bottom surface (31) of the chamber (29) in the contact module (16) forms an inclined plane, along which the resistor network (28) slides into the chamber (29), and stop members (32) protrude beyond the bottom surface (31) and secure the resistor network (28) in such a manner that the contact legs (33) come to lie above the welding contacts (30) of the punched lattice (14).

5. Rotary switch according to one of claims 1 to 4, characterised in that the switching member (22), which is pivotably displaceable in the contact module (16), carries at least one spring-loaded contact bridge (13) in the direction towards each contact face (21) of a contact carrier (15).

6. Rotary switch according to one of claims 1 to 5, characterised in that the contact bridge (13) has a U-shaped configuration, and a locking hole (35) is punched into at least one portion (34) of the contact bridge (13), a notch (36) which is provided on the switching member (22) engaging in said hole, once the contact bridge (13) has been inserted in the switching member (22), and retaining the contact bridge (13) in a non-detachably spring-loaded manner.

7. Rotary switch according to one of claims 1 to 6, characterised in that the housing (1), which accommodates the contact module (16), comprises a lower housing portion (2), which accommodates the contact module (16) in a recess (42) and has securing holes (5) and a plug collar (6), and comprises a cover (3), which closes the lower housing portion (2) and carries an adjustment slot (43), the lower housing portion (2) and the cover (3) each having a coaxial bore (44, 45), in which bores a hub (47) of the switching member (22) is inserted in a pivotably mounted manner, said hub having entrainment means (46).

8. Rotary switch according to one of claims 1 to 7, characterised in that the plug collar (6), which is provided on the lower housing portion (2) and accommodates the connection contacts (9), has a circumferential closed edge (48) as well as a through-aperture (49) leading to the recess (42) and an insert aperture (50) for an attachment plug.

9. Rotary switch according to one of claims 1 to 8, characterised in that aligning ribs (52) are provided on the base (51) of the recess (42) in the lower housing portion (2), the contact module (16) coming to abut against said ribs, and guide pins (53) are provided which engage in corresponding guide holes (54, 55) in the contact module (16), securing ribs (56) being provided on the cover (3) opposite the recess (42) in the direction of the contact module (16).

10. Rotary switch according to one of claims 1 to 9, characterised in that the lower housing portion (2) and the cover (3) have circumferential sealing profiles (57), which are adapted to one another, a metal ring (59) being inserted into a receiving groove (58) in the lower housing portion (2), lower housing portion (2) and cover (3) being induction-welded, a sealing insert (63) being inserted into the plug collar (6), which has the connection contacts (9), said sealing insert surrounding the connection contacts (9) and the internal region (61) of the plug collar (6) in a sealing manner and being supported by a pressing rim (62), and a sealing ring (65) being inserted into each circumferential seat (64), which is associated with the hub (47) of the switching member (22), said sealing ring sealing the bore (44) in the lower housing portion (2) and the bore (45) in the cover (3).

11. Rotary switch according to one of claims 1 to 10, characterised in that a screw-on plate (4) of the lower housing portion (2), which plate has a bore (44) accommodating the hub (47) of the switching member (22), is aligned parallel to the base (51) of the recess (42), and the switching member (22) has a Z-shaped transition between the hub (47) and the region (68) which supports the contact bridges (13).

12. Rotary switch according to one of claims 1 to 11, characterised in that the circumferential sealing profiles (57) lie in a plane (70) between lower housing portion (2) and cover (3).

13. Rotary switch according to one of claims 1 to 12, characterised in that an air-permeable stopper (73) is provided in the plane (70) between the lower housing portion (2) and the cover (3).

14. Rotary switch according to one of claims 1 to 13, characterised in that the lower housing portion (2) has an air outlet slot (76) in the region of the sealing profile (57) in a direction towards the switch interior and an air outlet bore (77) between the external surface of the rotary switch and the stopper (73), and a tower (79), which secures the snug fit of the stopper (73), is provided with an air inlet groove (78) on the cover (3).

15. Rotary switch according to one of claims 1 to 14, characterised in that the stopper (73) is formed from a sintered material.

16. Rotary switch according to one of claims 1 to 15, characterised in that a channel (71), which facilities the adjusting screwing-on operation, is provided on the screw-on plate (4) of the lower housing portion (2).

## Revendications

1. Interrupteur tournant, notamment interrupteur à entraînement, comportant un boîtier (1) portant des contacts de raccordement (9), dans lequel sont prévus des contacts fixes (10) qui s'étendent concentriquement les uns par rapport aux autres dans deux plans parallèles (11, 12), ainsi qu'un pont de contact (13) reliant électriquement les contacts fixes (10), caractérisé en ce que dans chaque plan (11, 12), les contacts fixes (10) sont constitués d'au moins une grille découpée (14), lesquelles grilles sont moulées par injection pour chaque plan (11, 12) dans un porte-contacts (15) comportant des entretoises d'écartement (17) et des éléments d'ajustement (18), et les porte-contacts (15) sont réunis en un module de contact (16), tandis qu'au moins un pont de contact (13) qui est maintenu par l'action d'un ressort dans un organe de commutation (22) monté pivotant et concentriquement dans le boîtier (1), glisse dans la chambre de contact (20) formée par les entretoises d'écartement (17) des porte-contacts (15) sur la surface de contact (21) dégagée et tournée vers la chambre de contact (20) de la grille découpée (14).

2. Interrupteur tournant selon la revendication 1, caractérisé en ce que le module de contact (16) composé des porte-contacts (15), présente un contour en forme de segment de cercle avec un prolongement (25) qui part de celui-ci et qui porte les contacts de raccordement (9), et les entretoises d'écartement (17) sont disposées sur la voie extérieure (16) du segment de cercle ainsi que sur la délimitation latérale (27) du segment et dans la zone du prolongement (25), les éléments d'ajustement (18) étant venus de moulage sur les entretoises d'écartement (17).

3. Interrupteur tournant selon l'une des revendications 1 ou 2,
caractérisé en ce que dans le module de contact (16) est encastrée une chambre (29) dans laquelle est posé un réseau de résistances (28) relié électriquement à des contacts soudés (30) de la grille découpée (14).

4. Interrupteur tournant selon la revendication 3, caractérisé en ce que la surface de fond (31) de la chambre (29) forme, dans le module de contact (16), un plan incliné sur lequel le réseau de résistance (28) glisse à l'intérieur de la chambre (29), et sur la surface de fond (31) dépassent des butées (32) qui fixent le réseau de résistance (28) de manière que les jambes de contact (33) viennent se situer au-dessus des contacts soudés (30) de la grille découpée (14).

5. Interrupteur tournant selon l'une des revendications 1 à 4,
caractérisé en ce que l'organe de commutation (22), mobile en pivotement dans le module de contact (16), porte au moins un pont de contact (13) soumis à l'action d'un ressort, vers chaque surface de contact (21) d'un porte-contacts (15).

6. Interrupteur tournant selon l'une des revendications 1 à 5,
caractérisé en ce que le pont de contact (13) est en forme de U et dans au moins une branche (34) du pont de contact (13) est découpé un trou d'accrochage (35) dans lequel, après insertion du pont de contact (13) dans l'organe de commutation (29), s'engage un cliquet (36) formé sur l'organe de commutation (22), qui maintient imperdable le pont de contact (13) sous l'action d'un ressort.

7. Interrupteur tournant selon l'une des revendications 1 à 6,
caractérisé en ce que l'organe de commutation (22) et le boîtier (1) qui reçoit le module de contact (16), sont constitués d'une partie inférieure (2) du boîtier qui reçoit le module de contact (16) dans un renfoncement (42) et qui comporte des trous de fixation (5) et une collerette de connecteur (6), ainsi que d'un couvercle (3) qui ferme la partie inférieure (2) du boîtier et qui porte une fente d'ajustage (43), la partie inférieure (2) du boîtier et le couvercle (3) présentant chacun un perçage coaxial (44, 45) dans lequel un moyeu (47) de l'organe de commutation (22), qui porte des moyens d'entraînement (46), est inséré et supporté en pivotement.

8. Interrupteur tournant selon l'une des revendications 1 à 7,
caractérisé en ce que la collerette de connecteur (6) qui est formée sur la partie inférieure (2) du boîtier et qui reçoit les contacts de raccordement (9), présente un bord (48) périphérique fermé, ainsi qu'une ouverture de passage (49) vers le renfoncement (42) et une ouverture d'enfichage (50) pour un connecteur de jonction.

9. Interrupteur tournant selon l'une des revendications 1 à 8,
caractérisé en ce que sur le fond (51) du renfoncement (42) dans la partie inférieure (2) du boîtier sont prévues des nervures d'orientation (52) sur lesquelles vient s'appliquer le module de contact (16), ainsi que des tenons de guidage (53) qui s'engagent dans des trous de guidage (54, 55) correspondants dans le module de contact (16), des nervures de fixation (56) étant prévues sur le couvercle (3), face au renfoncement (42), en direction du module de contact (16).

10. Interrupteur tournant selon l'une des revendications 1 à 9,
caractérisé en ce que la partie inférieure (2) du boîtier et le couvercle (3) présentent des profilés d'étanchéité (57) périphériques adaptés les uns aux autres, une bague métallique (59) étant placée dans une rainure de réception (58) de la partie inférieure (2) du boîtier, la partie inférieure (2) du boîtier et le couvercle (3) étant soudés par induction, dans la collerette de connecteur (6), qui présente les contacts de raccordement (9), étant insérée une garniture d'étanchéité (63) qui enferme de manière étanche les contacts de raccordement (9) et la zone intérieure (61) de la collerette de connecteur (6) et qui est maintenue par une couronne de pression (62), et une bague d'étanchéité (65), qui assure l'étanchéité du perçage (44) dans la partie inférieure (2) du boîtier et du perçage (45) dans le couvercle (3), étant introduite dans un siège (64) périphérique associé au moyeu (47) de l'organe de commutation (22).

11. Interrupteur tournant selon l'une des revendications 1 à 10,
caractérisé en ce qu'une plaque à visser (4) de la partie inférieure (2) du boîtier, qui présente un perçage (44) recevant le moyeu (47) de l'organe de commutation (22), a une orientation parallèle au fond (51) du renfoncement (42), et l'organe de commutation (22) présente une discontinuité en Z entre le moyeu (47) et la zone (68) qui maintient les ponts de contact (13).

12. Interrupteur tournant selon l'une des revendications 1 à 11,
caractérisé en ce que les profilés d'étanchéité (57) périphériques se situent dans un plan (70) entre la partie inférieure (2) du boitier et le couvercle (3).

13. Interrupteur tournant selon l'une des revendications 1 à 12,
caractérisé en ce qu'il est prévu un bouchon (73) perméable à l'air, dans le plan (70) entre la partie inférieure (2) du boîtier et le couvercle (3).

14. Interrupteur tournant selon l'une des revendications 1 à 13,
caractérisé en ce que la partie inférieure (2) du boîtier présente une fente de purge d'air (76), vers l'intérieur de l'interrupteur, dans la zone du profilé d'étanchéité (57), ainsi qu'un perçage de purge d'air (77) entre le côté extérieur de l'interrupteur tournant et le bouchon (73), et sur le couvercle (3) est prévue une tour (79), qui assure l'ajustement pressé du bouchon (73), avec une rainure d'aération (78).

15. Interrupteur tournant selon l'une des revendications 1 à 14,
caractérisé en ce que le bouchon (73) est constitué d'une matière frittée.

16. Interrupteur tournant selon l'une des revendications 1 à 15,
caractérisé en ce que sur la plaque à visser (4) de la partie inférieure (2) du boîtier est formée une gorge (71) qui facilite le vissage d'ajustement.
